# EUROPEAN PATENT SPECIFICATION

(11) **EP 4 053 064 B1**
(45) Date of publication and mention of the grant of the patent: **16.04.2025**
(21) Application number: 20883497.8
(22) Date of filing: 22.10.2020
(51) Int. Cl.: B66C 1/42, B66C 13/08, G21D 1/02

(54) **HOISTING MECHANISM FOR LARGE HEAVY-LOAD COMPONENT IN NUCLEAR FUSION ENVIRONMENT**
HEBEVORRICHTUNG FÜR GROSSE SCHWERLASTKOMPONENTE IN EINEM KERNFUSIONSSYSTEM
MÉCANISME DE LEVAGE POUR GRAND COMPOSANT DE CHARGE LOURDE DANS UN ENVIRONNEMENT DE FUSION NUCLÉAIRE

(30) Priority: 29.10.2019 CN 201911034725
(43) Date of publication of application: 07.09.2022
(73) Proprietor: Hefei Institutes of Physical Science, Chinese Academy of Sciences, Hefei, Anhui 230031 (CN)
(72) Inventor: SONG, Yun Tao, Hefei, Anhui 230031 (CN); CHENG, Yong, Hefei, Anhui 230031 (CN); ZHAO, Wen Long, Hefei, Anhui 230031 (CN); LI, Yang, Hefei, Anhui 230031 (CN); PAN, Hong Tao, Hefei, Anhui 230031 (CN); SHI, Shan Shuang, Hefei, Anhui 230031 (CN); YANG, Yang, Hefei, Anhui 230031 (CN); ZHENG, Lei, Hefei, Anhui 230031 (CN); QI, Min Zhong, Hefei, Anhui 230031 (CN); ZHANG, Jun, Hefei, Anhui 230031 (CN); TANG, Yu Xiang, Hefei, Anhui 230031 (CN); YANG, Song Zhu, Hefei, Anhui 230031 (CN); ZHANG, Yu, Hefei, Anhui 230031 (CN); LI, Jun Wei, Hefei, Anhui 230031 (CN)
(74) Representative: Twelmeier Mommer & Partner
(86) International application number: PCT/CN2020/122740
(87) International publication number: WO 2021/083025

(56) References cited:
- CN-A- 103 895 026
- CN-A- 108 529 522
- CN-A- 109 484 969
- CN-A- 109 484 969
- CN-A- 110 092 300
- CN-A- 110 216 709
- CN-A- 110 723 638
- CN-U- 204 823 679
- DE-A1- 3 517 460
- US-A- 4 166 647
- US-A1- 2016 221 188

## Description

### FIELD

The invention relates to the technical field of nuclear fusion reactor engineering, in particular to a hoisting mechanism for large heavy-load component in nuclear fusion environment. DE 35 17 460 A1 discloses a hoisting mechanism comprising a gripper whose arms are guided by carriers along guide surfaces of a casing. Each carrier is provided with toothed racks between which a gear is arranged that is driven by an electric motor.

### BACKGROUND

Nuclear fusion energy is a relatively a new type of clean energy, which has the characteristics of less consumption of raw materials, abundant resources and less radioactive pollution. Therefore, the research of controlled nuclear fusion has been paid more and more attention by countries all over the world. Magnetic confinement fusion of tokamak is considered to be one of the most promising avenues in the commercialization of fusion energy research. Tokamaks contain a ring-shaped vacuum vessel where fusion reactions take place. During the operation of the device, since the divertor of the first wall component in the vacuum vessel has been operated in the nuclear radiation environment for a long time, it is subjected to plasma thermal shock and neutron irradiation at the same time, which will cause great damage after a period of operation. Therefore, it needs to be transferred outside the tokamak device for maintenance. The weight of a single divertor is as high as ten tons, and the transfer mechanism needs to enter the vacuum vessel through the dedicated port to take out the divertor, which puts forward higher space and load requirements for the transfer mechanism. In addition, in the nuclear fusion environment, there should be no medium such as hydraulic oil that can potentially contaminate the inside of the device. The maintenance method of the divertor currently implemented is mainly a combination of manual and mechanical, which is difficult to adapt to the development needs of remote handling in the future fusion reactor nuclear fusion environment.

### SUMMARY

The purpose of the present invention is to provide a hoisting mechanism for large heavy-load component in nuclear fusion environment, so as to solve the problem that the nuclear fusion reactor in the prior art requires manual transfer of the divertor.

In order to achieve the above object, the technical solution adopted in the present invention is as follows: a hoisting mechanism for large heavy-load component in nuclear fusion environment, the hoisting mechanism comprising: a base frame, a pair of hanger arms, a top motor is provided at a front position in the base frame, wherein an output shaft of the top motor is connected with a first gear, wherein the pair of hanger arms are respectively arranged on left and right sides of the base frame and opposite to each other; at the front position in the base frame and on an upper portion of each of the hanger arms, first racks are respectively provided on front and rear sides of the first gear and opposite to each other; the first gear is engageable with the two opposing first racks at the same time; and a lower portion of each of the pair of hanger arms extends downward beyond a bottom of the base frame; a pair of arc arms (2) and rotary motors (8) are provided at a rear position in the base frame (1), the pair of arc arms are respectively arranged on the left and right sides of the base frame; an outer arc surface of each of the arc arms faces upward, one end of the arc arm extends forward and upward, and the other end of the arc arm extends rearward and downward beyond the bottom of the base frame; each of the arc arms is respectively provided with an arc-shaped groove corresponding to a shape of the arc arm and penetrating through the arc arm in a left-right direction; a second rack corresponding to the shape of the arc arm is respectively provided on the outer arc surface of each of the arc arms; and a plurality of support points are respectively provided on the left and right sides of the base frame which are arranged in an arc shape matching the arc arm, and each of the arc arms is slidably fitted to the respective support points on the corresponding side through the respective arc-shaped groove, and wherein second gears are respectively mounted on the left and right sides of the base frame at positions corresponding to the rotary motors, the second gear is respectively drive-engaged with the second rack of the arc arm on the corresponding side, and an output shaft of the rotary motor is drive-connected with the second gear.

Further, four corner positions of a top of the base frame are respectively connected with a hanging lug.

Further, each of the support points is a rotating wheel that is rotatably mounted on the base frame, and the rotating wheel is respectively located in the arc-shaped groove of the arc arm on the corresponding side to provide support to the arc arm.

Further, an arcuate length of the second rack is smaller than an arcuate length of the outer arc surface of the arc arm.

Further, an inner surface of a lower end of each of the pair of hanger arms is respectively formed into a protruding surface, and a roller is respectively mounted rotatably on the protruding surface; and the roller is concentric with the arc arm on the corresponding side.

Further, the output shaft of the top motor is connected with an input shaft of a 90-degree angle reducer, and the first gear is fixedly mounted on an output shaft of the 90-degree angle reducer.

Further, the number of the rotary motors is two; and the output shaft of each of the rotary motors is respectively connected with an input shaft of a 90-degree angle reducer, and an output shaft of each of the 90-degree angle reducers is respectively connected coaxially with one of the second gears.

Further, catching grooves extending along the left-right direction of the base frame are respectively provided on the front and rear sides of the first gear at the bottom of the base frame; a first connecting member is respectively provided on the upper portion of each of the hanger arms, each of the first racks is respectively fixed on the corresponding first connecting member, and the first connecting member is slidably caught in the corresponding catching groove; the top motor drives the first connecting members to slide back and forth in the respective catching grooves through the first gear and the first racks engaged with the first gear, so that the hanger arms move oppositely to be close to or away from each other along the left-right direction of the base frame; and a lower portion of each of the hanger arms is provided with a protruding roller.

Further, the arc arms are mounted on opposite sides of the base frame, the rotary motor drives the arc arm through the second gear and the second rack provided on the arc arm, so that the arc arm moves along the arc shape determined by the plurality of support points; and a lower portion of each of the arc arms is provided with a connecting member.

Further, an inner surface of a lower end of each of the pair of hanger arms is respectively formed into a protruding surface, and a roller is respectively mounted rotatably on the protruding surface; the roller and the arc arm on the corresponding side are located on a concentric circle; and when the hanger arms and the arc arms are both connected to a divertor component to be transported, the arc arms are driven to rotate the divertor component along an arc concentric with the rollers.

Further, catching grooves extending along the left-right direction of the base frame are respectively provided on the front and rear sides of the first gear at the bottom of the base frame; a second connecting member fixedly connected with a first connecting member is respectively provided on the upper portion of each of the hanger arms, the first connecting member is slidably caught in the corresponding catching groove, and each of the first racks is respectively fixed on the corresponding first connecting member; the top motor drives the first connecting members to slide back and forth in the respective catching grooves through the first gear and the first racks engaged with the first gear, so that the two hanger arms move oppositely at the same time to be close to or away from each other along the left-right direction of the base frame; and a lower portion of each of the hanger arms is provided with a protruding roller.

In the present invention, the two hanger arms are arranged on the left and right sides, the top motor drives the two hanger arms to move oppositely at the same time to be close to or away from each other through gears and racks, and the hanger arm can enter and exit (extend and retract) along the direction of the catching groove. A lower portion of each of the hanger arms is provided with a protruding roller for connecting large heavy-load component.

The arc arms are mounted on opposite sides of the base frame, and rotary motor drives the arc arm through gears, so that the arc arm moves along the arc shape determined by the plurality of support points. A lower portion of each of the arc arms is provided with a connecting member for connecting large heavy-load component.

The roller at the lower portion of the hanger arm and the arc arm on the corresponding side are located on a concentric circle. When the hanger arms and the arc arms are both connected to a divertor component to be transported, the arc arms are driven to rotate the divertor component along an arc concentric with the rollers.

The present invention provides a technical solution of hoisting the divertor from above to carry out remote handling and maintenance of the divertor, and has the following advantages:
(1) The process of the hoisting technical solution is simple, which can improve the maintenance efficiency;
(2) The hoisting mechanism has a compact structure, low space requirements, and excellent adaptability to narrow spaces;
(3) The technology of the hoisting system is mature and the product is stable, which can improve the maintenance reliability;
(4) High universality with other module maintenance equipment in the tokamak device, which can reduce the maintenance cost;
(5) It is driven by a motor, there is no risk of contaminating the vacuum vessel.

### BRIEF DESCRIPTION OF THE DRAWINGS

FIG. 1 is a schematic diagram illustrating the structure of the present invention;
FIG. 2 is a schematic diagram illustrating the connection between the top motor and the hanger arm according to the present invention;
FIG. 3 is a partial enlarged view of the present invention;
FIG. 4 is a side view of the structure of the present invention;
FIG. 5 is a diagram illustrating an operating state when the divertor of the present invention is transported; and
FIG. 6 is a diagram illustrating an operating state when the divertor of the present invention is rotated.

### LIST OF REFERENCES

1 base frame
2 arc arm
3 support point
4 roller
5 hanger arm
6 hanging lug
7 motor
8 rotary motor
9 catching groove
10 second gear
11 first reducer
12 second reducer
13 divertor
2-1 second rack
2-2 arc-shaped groove
2-3 connecting member
5-1 first rack
5-2 first connecting member
5-3 second connecting member
11-1 first gear

### DETAILED DESCRIPTION OF THE EMBODIMENT(S)

The technical solutions of the present invention will be further described below with reference to the accompanying drawings and embodiments.

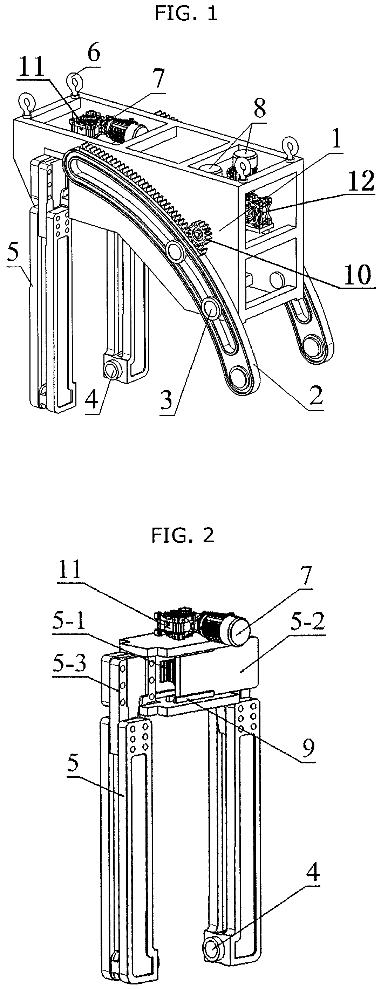

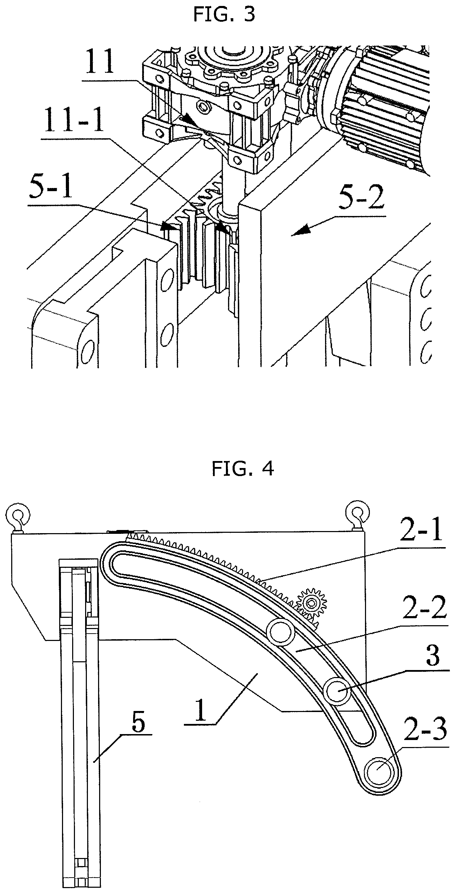

As shown in FIGs. 1-3, a hoisting mechanism for large heavy-load component in nuclear fusion environment includes a base frame 1, a pair of hanger arms 5, and a pair of arc arms 2. Four corners of the top of the base frame 1 are respectively provided with hanging lugs 6. A top motor 7 is provided at a front position in the base frame 1, and a pair of rotary motors 8 are provided at a rear position in the base frame 1. The above-mentioned pair of hanger arms 5 are arranged on the left and right sides of the base frame 1 and face each other. A second connecting member 5-3 fixedly connected with a first connecting member 5-2 is fixedly mounted on the upper portion of each hanger arm 5, a lower portion of each of the hanger arm 5 extends downward to beyond the bottom of the base frame 1, and the opposite surfaces of the lower ends of each hanger arm 5 are respectively formed into protruding surfaces, and a roller 4 is respectively mounted rotatably on the protruding surface. In addition, the output shaft of the top motor 7 is drive-connected with the first gear 11-1. The front and rear sides of the first gear 11-1 at the bottom of the base frame 1 are respectively provided with catching grooves 9 extending along the left-right direction of the base frame 1, the above-mentioned first connecting member 5-2 is caught in the catching groove 9 and can slide in the catching groove 9. That is, the hanger arms 5, the first connecting member 5-2, and the second connecting member 5-3 are fixedly and integrally connected, and since the catching grooves 9 are located on the front and rear sides of the first gear 11-1 respectively, the above-mentioned first connecting members 5-2 slidably mounted in the catching grooves 9 are actually also located on the front and rear sides of the first gear 11-1. In other words, the first connecting members 5-2 caught in the catching grooves 9 face each other across the first gear 11-1. In addition, first racks 5-1 are respectively disposed on the opposite surfaces of each first connecting member 5-2, and the above-mentioned first gear 11-1 can be drive-engaged with the first rack 5-1 at the same time. In this way, the power of the top motor 7 is transmitted to the first rack 5-1 via the first gear 11-1, and drives the first connecting member 5-2 to slide back and forth in the respective catching grooves 9, so that the two hanger arms 5 can move in opposite directions relative to each other. In other words, the two hanger arms 5 can move oppositely to be close to or away from each other along the left-right direction of the base frame 1, so as to realize the clamping and releasing of the divertor 13 by the roller 4 located at the lower end. The two arc arms 2 are arranged on the left and right sides of the base frame 1, and the outer arc surface of each of the arc arm 2 faces upward. Each of the arc arm 2 is respectively provided with an arc-shaped groove 2-2 corresponding to a shape of the arc arm, and the arc-shaped groove 2-2 penetrates through the arc arm 2 in the left-right direction respectively. A second rack 2-1 corresponding to the shape of the arc arm 2 is respectively provided on the outer arc surface of each of the arc arms 2, an arcuate length of the second rack 2-1 is smaller than an arcuate length of the outer arc surface of the arc arm 2. On both sides of the base frame 1, two support points 3 are respectively provided on the center line of the arc arm 2, respectively, the arc arms 2 on each side are slidably fitted to the respective support points 3 on the corresponding side through the respective arc-shaped groove 2-2, and one end of the arc arm 2 extends forward and upward, the other end of the arc arm 2 extends rearward and downward to beyond the bottom of the base frame 1. Connecting members 2-3 are respectively mounted on the other ends of the two arc arms 2. The center of the roller 4 at the lower end of the hanger arm 5 is concentric with the circle where the arc arm 2 on the corresponding side is located. The left and right sides of the base frame 1 are also rotatably mounted with second gears 10 corresponding to the positions of the rotary motor 8, respectively, the second gears 10 are respectively drive-engaged with the second racks 2-1 on the outer arc surfaces of the arc arm 2 on the corresponding side, the output shafts of the two rotary motors 8 are respectively in a one-to-one correspondence with the two second gears 10 for transmission connection.

The support point 3 is a rotating wheel that is rotatably mounted on the corresponding side of the base frame 1, and the rotating wheel is respectively located in the arc-shaped groove 2-2 of the arc arm 2 on the corresponding side to provide support to the arc arm 2.

The output shaft of the top motor 7 is connected with the input shaft of a 90-degree angle first reducer 11, and the first gear 11-1 is fixedly mounted on the output shaft of the 90-degree angle reducer 11. The first gear racks 5-1 on both sides are driven by the first gear 11-1 to drive the sliding of the first connecting member 5-2 and through the sliding of the first connecting member 5-2, the hanger arm 5 is extended and retracted through the second connecting member 5-3 (the two hanger arms 5 can move oppositely to be close to or away from each other along the left-right direction of the base frame 1). The output shaft of each of the rotary motors 8 is respectively connected with the input shaft of the 90-degree angle reducer 12, and the output shafts of the two 90-degree angle second reducers 12 are coaxially connected to the two second gears 10 in a one-to-one correspondence.

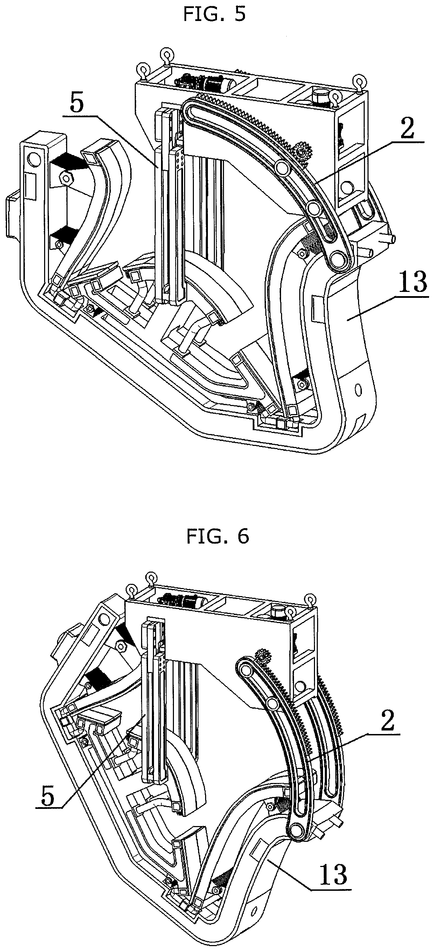

As shown in FIG. 5, during transferring, the divertor 13 is jointly held by the two hanger arms 5 and the two arc arms 2. As shown in FIG. 6, when the divertor 13 needs to be rotated, the arc arm 2 is extended to realize the rotation of the divertor 13.

## Claims

1. A hoisting mechanism for large heavy-load component in nuclear fusion environment, the hoisting mechanism comprising:
a base frame (1), a pair of hanger arms (5), a top motor (7) is provided at a front position in the base frame (1),
wherein an output shaft of the top motor (7) is connected with a first gear (11-1),
wherein the pair of hanger arms (5) are respectively arranged on left and right sides of the base frame (1) and opposite to each other; at the front position in the base frame (1) and on an upper portion of each of the hanger arms (5), first racks (5-1) are respectively provided on front and rear sides of the first gear (11-1) and opposite to each other; the first gear (11-1) is engageable with the two opposing first racks (5-1) at the same time; and a lower portion of each of the pair of hanger arms (5) extends downward beyond a bottom of the base frame (1),
**characterized in that** the hoisting mechanism further comprises a pair of arc arms (2), and rotary motors (8) are provided at a rear position in the base frame (1),
wherein the pair of arc arms (2) are respectively arranged on the left and right sides of the base frame (1); an outer arc surface of each of the arc arms (2) faces upward, one end thereof extends forward and upward, and the other end thereof extends rearward and downward beyond the bottom of the base frame (1); each of the arc arms (2) is respectively provided with an arc-shaped groove (2-2) corresponding to a shape of the arc arm (2) and penetrating through the arc arm (2) in a left-right direction; a second rack (2-1) corresponding to the shape of the arc arm (2) is respectively provided on the outer arc surface of each of the arc arms (2); and a plurality of support points are respectively provided on the left and right sides of the base frame (1) which are arranged in an arc shape matching the arc arm (2), and each of the arc arms (2) is slidably fitted to the respective support points on the corresponding side through the respective arc-shaped groove (2-2), and
wherein second gears (10) are respectively mounted on the left and right sides of the base frame (1) at positions corresponding to the rotary motors (8), the second gear (10) is respectively drive-engaged with the second rack (2-1) of the arc arm (2) on the corresponding side, and an output shaft of the rotary motor (8) is drive-connected with the second gear (10).

2. The hoisting mechanism according to claim 1, wherein four corner positions of a top of the base frame (1) are respectively connected with a hanging lug (6).

3. The hoisting mechanism according to claim 1, wherein each of the support points is a rotating wheel that is rotatably mounted on the base frame (1), and the rotating wheel is respectively located in the arc-shaped groove (2-2) of the arc arm (2) on the corresponding side to provide support to the arc arm (2).

4. The hoisting mechanism according to claim 1, wherein an arcuate length of the second rack (2-1) is smaller than an arcuate length of the outer arc surface of the arc arm (2).

5. The hoisting mechanism according to claim 1, wherein,
an inner surface of a lower end of each of the pair of hanger arms (5) is respectively formed into a protruding surface, and a roller (4) is respectively mounted rotatably on the protruding surface; and
the roller (4) is concentric with the arc arm (2) on the corresponding side.

6. The hoisting mechanism according to claim 1, wherein an output shaft of the top motor (7) is connected with an input shaft of a 90-degree angle reducer, and the first gear (11-1) is fixedly mounted on an output shaft of the 90-degree angle reducer.

7. The hoisting mechanism according to claim 1, wherein,
the number of the rotary motors (8) is two; and
the output shaft of each of the rotary motors (8) is respectively connected with an input shaft of a 90-degree angle reducer, and an output shaft of each of the 90-degree angle reducers is respectively connected coaxially with one of the second gears (10).

8. The hoisting mechanism according to claim 1, wherein,
catching grooves (9) extending along the left-right direction of the base frame (1) are respectively provided on the front and rear sides of the first gear (11-1) at the bottom of the base frame (1);
a first connecting member (5-2) is respectively provided on the upper portion of each of the hanger arms (5), each of the first racks (5-1) is respectively fixed on the corresponding first connecting member (5-2), and the first connecting member (5-2) is slidably caught in the corresponding catching groove (9);
the top motor (7) drives the first connecting members (2-3) to slide back and forth in the respective catching grooves (9) through the first gear (11-1) and the first racks (5-1) engaged with the first gear (11-1), so that the hanger arms (5) move oppositely to be close to or away from each other along the left-right direction of the base frame (1); and
a lower portion of each of the hanger arms (5) is provided with a protruding roller (4).

9. The hoisting mechanism according to claim 1, wherein,
the arc arms (2) are mounted on opposite sides of the base frame (1), the rotary motor (8) drives the arc arm (2) through the second gear (10) and the second rack (2-1) provided on the arc arm (2), so that the arc arm (2) moves along the arc shape determined by the plurality of support points; and
a lower portion of each of the arc arms (2) is provided with a connecting member (2-3).

10. The hoisting mechanism according to claim 1, wherein,
an inner surface of a lower end of each of the pair of hanger arms (5) is respectively formed into a protruding surface, and a roller (4) is respectively mounted rotatably on the protruding surface;
the roller (4) and the arc arm (2) on the corresponding side are located on a concentric circle; and
when the hanger arms (5) and the arc arms (2) are both connected to a divertor component to be transported, the arc arms (2) are driven to rotate the divertor component along an arc concentric with the rollers (4).

11. The hoisting mechanism according to claim 1, wherein,
catching grooves (9)extending along the left-right direction of the base frame (1) are respectively provided on the front and rear sides of the first gear (11-1) at the bottom of the base frame (1);
a second connecting member (5-3) fixedly connected with a first connecting member (5-2) is respectively provided on the upper portion of each of the hanger arms (5), the first connecting member (5-2) is slidably caught in the corresponding catching groove (9), and each of the first racks (5-1) is respectively fixed on the corresponding first connecting member (5-2);
the top motor (7) drives the first connecting members (5-2) to slide back and forth in the respective catching grooves (9) through the first gear (11-1) and the first racks (5-1) engaged with the first gear (11-1), so that the two hanger arms (5) move oppositely at the same time to be close to or away from each other along the left-right direction of the base frame (1); and
a lower portion of each of the hanger arms (5) is provided with a protruding roller (4).

## Patentansprüche

1. Hebevorrichtung für große Schwerlastkomponente in einem Kernfusionssystem, wobei die Hebevorrichtung aufweist:
einen Grundrahmen (1), ein Paar von Aufhängearmen (5), einen oberen Motor (7), der an einer vorderen Position in dem Grundrahmen (1) vorgesehen ist,
wobei eine Abtriebswelle des oberen Motors (7) mit einem ersten Zahnrad (11-1) verbunden ist
wobei das Paar Aufhängerarme (5) jeweils auf der linken und rechten Seite des Grundrahmens (1) und einander gegenüberliegend angeordnet ist; an der vorderen Position in dem Grundrahmen (1) und an einem oberen Abschnitt jeder der Aufhängerarme (5) erste Zahnstangen (5-1) jeweils auf der vorderen und hinteren Seite des ersten Zahnrades (11-1) und einander gegenüberliegend angeordnet sind; das erste Zahnrad (11-1) gleichzeitig mit den beiden gegenüberliegenden ersten Zahnstangen (5-1) in Eingriff gebracht werden kann; und sich ein unterer Abschnitt des Paars von Hängerarmen (5) jeweils nach unten über einen Boden des Grundrahmens (1) hinaus erstreckt,
**dadurch gekennzeichnet, dass** der Hebevorrichtung zudem ein Paar Bogenarme (2) aufweist und Drehmotoren (8) an einer hinteren Position an dem Grundrahmen (1) angeordnet sind,
wobei das Paar Bogenarme (2) jeweils auf der linken und rechten Seite des Grundrahmens (1) angeordnet ist; eine äußere Bogenfläche jedes der Bogenarme (2) nach oben weist, ein Ende davon sich nach vorne und oben erstreckt und das andere Ende davon sich nach hinten und unten über den Boden des Grundrahmens (1) hinaus erstreckt; jeder der Bogenarme (2) jeweils mit einer bogenförmigen Rille (2-2) versehen ist, die einer Form des Bogenarms (2) entspricht und den Bogenarm (2) in einer Links-Rechts-Richtung durchdringt; eine zweite Zahnstange (2-1), die der Form des Bogenarms (2) entspricht, jeweils auf der äußeren Bogenfläche jedes der Bogenarme (2) angeordnet ist; und mehrere Stützpunkte jeweils auf der linken und rechten Seite des Grundrahmens (1) vorgesehen sind, die in einer Bogenform angeordnet sind, die zu dem Bogenarm (2) passt, und jeder der Bogenarme (2) auf der entsprechenden Seite durch die jeweilige bogenförmige Rille (2-2) an den jeweiligen Stützpunkten gleitend angebracht ist, und
wobei zweite Zahnräder (10) jeweils auf der linken und rechten Seite des Grundrahmens (1) an Positionen angebracht sind, die den Drehmotoren (8) entsprechen, das zweite Zahnrad (10) jeweils mit der zweiten Zahnstange (2-1) des Bogenarms (2) auf der entsprechenden Seite in Antriebseingriff steht und eine Abtriebswelle des Drehmotors (8) mit dem zweiten Zahnrad (10) antriebsmäßig verbunden ist.

2. Hebevorrichtung nach Anspruch 1, wobei vier Eckpositionen einer Oberseite des Grundrahmens (1) jeweils mit einer Aufhängeöse (6) verbunden sind.

3. Hebevorrichtung nach Anspruch 1, wobei jeder der Stützpunkte ein drehbares Rad ist, das drehbar an dem Grundrahmen (1) angebracht ist, und das drehbare Rad auf der entsprechenden Seite jeweils in der bogenförmigen Rille (2-2) des Bogenarms (2) angeordnet ist, um den Bogenarm (2) zu stützen.

4. Hebevorrichtung nach Anspruch 1, wobei eine Bogenlänge der zweiten Zahnstange (2-1) kleiner ist als eine Bogenlänge der äußeren Bogenfläche des Bogenarms (2).

5. Hebevorrichtung nach Anspruch 1, wobei,
eine Innenfläche eines unteren Endes jedes der beiden Aufhängerarme (5) jeweils zu einer vorstehenden Fläche geformt ist und eine Rolle (4) jeweils drehbar an der vorstehenden Fläche angebracht ist; und
die Rolle (4) auf der entsprechenden Seite konzentrisch mit dem Bogenarm (2) ist.

6. Hebevorrichtung nach Anspruch 1, wobei eine Abtriebswelle des oberen Motors (7) mit einer Antriebswelle eines 90-Grad-Winkelreduzierstücks verbunden ist und das erste Zahnrad (11-1) fest auf einer Abtriebswelle des 90-Grad-Winkelreduzierstücks montiert ist.

7. Hebevorrichtung nach Anspruch 1, wobei die Anzahl der Drehmotoren (8) zwei beträgt und die Abtriebswelle jedes der Drehmotoren (8) jeweils mit einer Antriebswelle eines 90-Grad-Winkelreduzierstücks verbunden ist und eine Abtriebswelle jedes der 90-Grad-Winkelreduzierstück jeweils koaxial mit einem der zweiten Zahnräder (10) verbunden ist.

8. Hebevorrichtung nach Anspruch 1, wobei,
an der Vorder- und Rückseite des ersten Zahnrads (11-1) an der Unterseite des Grundrahmens (1) jeweils Fangrillen (9) sind, die sich entlang der Links-Rechts-Richtung des Grundrahmens (1) erstrecken;
ein erstes Verbindungselement (5-2) jeweils am oberen Abschnitt jedes der Aufhängerarme (5) vorgesehen ist, jede der ersten Zahnstangen (5-1) jeweils an dem entsprechenden ersten Verbindungselement (5-2) befestigt ist und das erste Verbindungselement (5-2) gleitend in die entsprechende Fangrille (9) eingreift;
der obere Motor (7) die ersten Verbindungselemente (2-3) antreibt, um in den jeweiligen Fangrillen (9) durch das erste Zahnrad (11-1) und die ersten Zahnstangen (5-1), die mit dem ersten Zahnrad (11-1) in Eingriff stehen, hin und her zu gleiten, so dass sich die Aufhängerarme (5) entgegengesetzt bewegen, um sich entlang der Links-Rechts-Richtung des Grundrahmens (1) einander anzunähern oder voneinander zu entfernen; und
ein unterer Teil jedes Aufhängearms (5) ist mit einer vorstehenden Rolle (4) versehen.

9. Hebevorrichtung nach Anspruch 1, wobei,
die Bogenarme (2) an gegenüberliegenden Seiten des Grundrahmens (1) angebracht sind, der Drehmotor (8) den Bogenarm (2) über das zweite Zahnrad (10) und die zweite Zahnstange (2-1), die an dem Bogenarm (2) vorgesehen ist, antreibt, so dass sich der Bogenarm (2) entlang der Bogenform bewegt, die durch die Stützpunkte bestimmt ist; und
ein unterer Abschnitt jedes der Bogenarme (2) mit einem Verbindungselement (2-3) versehen ist.

10. Hebevorrichtung nach Anspruch 1, wobei,
eine Innenfläche eines unteren Endes jedes der beiden Aufhängerarme (5) jeweils zu einer vorstehenden Fläche geformt ist und eine Rolle (4) jeweils drehbar an der vorstehenden Fläche angebracht ist;
die Rolle (4) und der Bogenarm (2) auf der entsprechenden Seite auf einem konzentrischen Kreis angeordnet sind; und
wenn die Hängerarme (5) und die Bogenarme (2) beide mit einer zu transportierende Divertorkomponente verbunden sind, die Bogenarme (2) angetrieben werden, um die Divertorkomponente entlang eines zu der Rolle (4) konzentrischen Bogens zu drehen.

11. Hebevorrichtung nach Anspruch 1, wobei,
an der Vorder- und Rückseite des ersten Zahnrads (11-1) an der Unterseite des Grundrahmens (1) jeweils Fangrillen (9) vorgesehen sind, die sich in der Links-Rechts-Richtung des Grundrahmens (1) erstrecken;
ein zweites Verbindungselement (5-3), das fest mit einem ersten Verbindungselement (5-2) verbunden ist, jeweils am oberen Abschnitt jedes der Aufhängerarme (5) vorgesehen ist, das erste Verbindungselement (5-2) gleitend in die entsprechende Fangrille (9) einpasst ist und jede der ersten Zahnstangen (5-1) jeweils an dem entsprechenden ersten Verbindungselement (5-2) befestigt ist;
der obere Motor (7) die ersten Verbindungselemente (5-2) antreibt, um in den jeweiligen Fangrillen (9) durch das erste Zahnrad (11-1) und die ersten Zahnstangen (5-1), die mit dem ersten Zahnrad (11-1) in Eingriff stehen, hin und her zu gleiten, so dass sich die beiden Aufhängerarme (5) gleichzeitig entgegengesetzt bewegen, um sich entlang der Links-Rechts-Richtung des Grundrahmens (1) einander anzunähern oder voneinander zu entfernen; und
ein unterer Abschnitt jedes Hängerarms (5) ist mit einer vorstehenden Rolle (4) versehen ist.

## Revendications

1. Mécanisme de levage pour un grand composant de charge lourde dans un environnement de fusion nucléaire, le mécanisme de levage comprenant :
un cadre de base (1), une paire de bras de levage (5), un moteur supérieur (7) est prévu à une position avant dans le cadre de base (l),
dans lequel un arbre de sortie du moteur supérieur (7) est relié à une première roue denteé (11-1)
dans lequel la paire de bras de levage (5) est respectivement disposée sur les côtés gauche et droit du cadre de base (1) et opposée l'une à l'autre ; à la position avant du cadre de base (1) et sur une partie supérieure de chacun des bras de levage (5), des premières crémaillères (5-1) sont respectivement disposées sur les côtés avant et arrière de la première roue dentée (11-1) et opposées l'une à l'autre ; la première roue dentée (11-1) peut être engagée simultanément avec les deux premières crémaillères opposées (5-1) ; et une partie inférieure de chacun de la paire de bras de levage (5) s'étend vers le bas au-delà d'un fond du cadre de base (1),
**caractérisé par le fait que** le mécanisme de levage comprend en outre une paire de bras d'arc (2), et que les moteurs rotatifs (8) sont placés en position arrière dans le cadre de base (1),
dans lequel la paire de bras d'arc (2) est respectivement disposée sur les côtés gauche et droit du cadre de base (1) ; une surface d'arc extérieure de chacun des bras d'arc (2) est orientée vers le haut, une de ses extrémités s'étend vers l'avant et vers le haut, et l'autre extrémité s'étend vers l'arrière et vers le bas au-delà du bas du cadre de base (1) ; chacun des bras d'arc (2) est respectivement pourvu d'une rainure en forme d'arc (2-2) correspondant à une forme du bras d'arc (2) et pénétrant à travers le bras d'arc (2) dans une direction gauche-droite ; une seconde crémaillère (2-1) correspondant à la forme du bras d'arc (2) est respectivement prévue sur la surface extérieure de l'arc de chacun des bras d'arc (2) ; et une pluralité de points de support sont respectivement prévus sur les côtés gauche et droit du cadre de base (1) qui sont disposés en forme d'arc correspondant au bras d'arc (2), et chacun des bras d'arc (2) est fixé de manière coulissante aux points de support respectifs sur le côté correspondant à travers la rainure en forme d'arc respective (2-2), et
dans lequel des secondes roues dentées (10) sont respectivement montées sur les côtés gauche et droit du cadre de base (1) à des positions correspondant aux moteurs rotatifs (8), la seconde roue dentée (10) est respectivement en prise avec la seconde crémaillère (2-1) du bras d'arc (2) sur le côté correspondant, et un arbre de sortie du moteur rotatif (8) est en prise avec la seconde roue dentée (10).

2. Mécanisme de levage selon la revendication 1, dans lequel quatre positions de coin d'une partie supérieure du cadre de base (1) sont respectivement reliées à un œillet de suspension (6).

3. Mécanisme de levage selon la revendication 1, dans lequel chacun des points de support est une roue rotative qui est montée rotativement sur le cadre de base (1), et la roue rotative est respectivement située dans la rainure en forme d'arc (2-2) du bras d'arc (2) sur le côté correspondant pour fournir un support au bras d'arc (2).

4. Mécanisme de levage selon la revendication 1, dans lequel une longueur d'arc de la seconde crémaillère (2-1) est inférieure à une longueur d'arc de la surface d'arc extérieure du bras d'arc (2).

5. Mécanisme de levage selon la revendication 1, dans lequel,
une surface intérieure de l'extrémité inférieure de chaqun de la paire de bras de levage (5) est respectivement formée en une surface saillante, et un rouleau (4) est respectivement monté rotatif sur la surface saillante ; et
le rouleau (4) est concentrique avec le bras d'arc (2) du côté correspondant.

6. Mécanisme de levage selon la revendication 1, dans lequel un arbre de sortie du moteur supérieur (7) est relié à un arbre d'entrée d'un réducteur d'angle à 90 degrés, et la première roue dentée (11-1) est montée de manière fixe sur un arbre de sortie du réducteur d'angle à 90 degrés.

7. Mécanisme de levage selon la revendication 1, dans lequel le nombre de moteurs rotatifs (8) est de deux ; et l'arbre de sortie de chacun des moteurs rotatifs (8) est respectivement relié à un arbre d'entrée d'un réducteur d'angle de 90 degrés, et un arbre de sortie de chacun des réducteurs d'angle de 90 degrés est respectivement relié de manière coaxiale à l'une des secondes roue dentées (10).

8. Mécanisme de levage selon la revendication 1, dans lequel,
des rainures de réception (9) s'étendant le long de la direction gauche-droite du cadre de base (1) sont respectivement prévues sur les côtés avant et arrière de la première roue dentée (11-1) au bas du cadre de base (1) ;
un premier élément de liaison (5-2) est respectivement prévu sur la partie supérieure de chacun des bras de levage (5), chacune des premières crémaillères (5-1) est respectivement fixée sur le premier élément de liaison correspondant (5-2), et le premier élément de liaison (5-2) est pris de manière coulissante dans la rainure de réception correspondante (9) ;
le moteur supérieur (7) entraîne les premiers éléments de liaison (2-3) à glisser d'avant en arrière dans les rainures de réception respectives (9) par l'intermédiaire de la première roue dentée (11-1) et des premières crémaillères (5-1) engagées dans la première roue dentée (11-1), de sorte que les bras de levage (5) se déplacent de manière opposée pour se rapprocher ou s'éloigner l'un de l'autre le long de la direction gauche-droite du cadre de base (1) ; et
la partie inférieure de chacun des bras de levage (5) est pourvue d'un rouleau en saillie (4).

9. Mécanisme de levage selon la revendication 1, dans lequel,
les bras d'arc (2) sont montés sur les côtés opposés du cadre de base (1), le moteur rotatif (8) entraîne le bras d'arc (2) par l'intermédiaire de la seconde roue dentée (10) et de la seconde crémaillère (2-1) prévue sur le bras d'arc (2), de sorte que le bras d'arc (2) se déplace le long de la forme d'arc déterminée par la pluralité de points de support ; et
une partie inférieure de chacun des bras d'arc (2) est pourvue d'un élément de connexion (2-3).

10. Mécanisme de levage selon la revendication 1, dans lequel,
une surface intérieure de l'extrémité inférieure de chacun de la paire de bras de levage (5) est respectivement formée en une surface saillante, et un rouleau (4) est respectivement monté rotatif sur la surface saillante ;
le rouleau (4) et le bras d'arc (2) du côté correspondant sont situés sur un cercle concentrique ; et
lorsque les bras de levage (5) et les bras d'arc (2) sont tous deux connectés à un élément de divertor à transporter, les bras d'arc (2) sont entraînés pour faire tourner l'élément de divertor le long d'un arc concentrique avec les rouleaux (4).

11. Mécanisme de levage selon la revendication 1, dans lequel,
des rainures de réception (9) s'étendant le long de la direction gauche-droite du cadre de base (1) sont respectivement prévues sur les côtés avant et arrière de la première roue dentée (11-1) au niveau du fond du cadre de base (1) ;
un second élément de liaison (5-3) relié de manière fixe à un premier élément de liaison (5-2) est respectivement prévu sur la partie supérieure de chacun des bras de levage (5), le premier élément de liaison (5-2) est pris de manière coulissante dans la rainure de réception correspondante (9), et chacune des premières crémaillères (5-1) est respectivement fixée sur le premier élément de liaison correspondant (5-2) ;
le moteur supérieur (7) entraîne les premiers éléments de liaison (5-2) à glisser d'avant en arrière dans les rainures de réception respectives (9) par l'intermédiaire de la première roue dentée (11-1) et des premières crémaillères (5-1) engagées dans la première roue dentée (11-1), de sorte que les deux bras de levage (5) se déplacent simultanément de manière opposée pour se rapprocher ou s'éloigner l'un de l'autre le long de la direction gauche-droite du cadre de base (1) ; et
une partie inférieure de chacun des bras de levage (5) est pourvue d'un rouleau en saillie (4).
